# EUROPEAN PATENT SPECIFICATION

(11) **EP 1 759 775 B1**
(45) Date of publication and mention of the grant of the patent: **09.06.2010**
(21) Application number: 06018101.3
(22) Date of filing: 30.08.2006
(51) Int. Cl.: B05D 1/14, A41D 19/00

(54) **Glove having flocked inner surface and manufacturing method thereof**
Handschuh mit beflockter innerer Oberfläche und Herstellungsverfahren dafür
Gant avec une surface interne obtenue par flocage et méthode correspondante

(30) Priority: 30.08.2005 JP 2005249095; 30.08.2005 JP 2005249096
(43) Date of publication of application: 07.03.2007
(73) Proprietor: SHOWA GLOVE Co., Himeji-shi Hyogo 670-0802 (JP)
(72) Inventor: Morita, Kazuaki, Himeji-shi, Hyogo 670-0802 (JP); Sakamoto, Shinichi, Himeji-shi, Hyogo 670-0802 (JP)
(74) Representative: Vossius & Partner

(56) References cited:
- EP-A- 1 518 471
- WO-A-2004/058416
- JP-A- 5 305 689
- US-A- 4 578 826
- US-A- 5 403 884
- US-A1- 2004 033 334
- US-A1- 2005 136 236

## Description

The present invention relates to a glove which is suitable for use during cooking, washing, and other activities, and more particularly to a glove in which flocking is applied to the inner surface of a substrate, and a manufacturing method thereof.

Rubber gloves made of natural rubber (NR), acrylonitrile-butadiene rubber (NBR), and so on or gloves made of flexible polyvinyl chloride (PVC) are used widely as household gloves for cooking, washing, and so on or gloves for other types of work. The inner surface of these gloves is often subjected to flocking using short fibers to make the gloves easier to put on and remove, enhance their texture, and improve their heat retaining property when used in water (see e.g. JP-A-5-305689, JP-A-2004-27449, and JP-A-2004-162249).

With these gloves, however, when electrostatic flocking is used to adhere short fibers to the inner surface of a substrate via an adhesive layer, the short fibers often lie flat on the substrate surface, particularly at the finger crotch portions and so on. In such a case, the flocking density decreases or the short fibers become buried in the adhesive layer, leading to a decrease in comfort and an unpleasant texture. There is also room for improvement in the flexibility of the short fibers flocked on the inner surface.

EP 1 518 471 A1 relates to moisture retentive gloves using fibers treated with a moisture retentive component on the inner surface of gloves, the fibers are made of rubber or synthetic resin.

JP 05 305 689 A relates to a raised product made of natural rubber wherein, when resin treatment is applied to the inner surfaces of working gloves or boots moulded using natural rubber, a natural rubber substrate is immersed in an emulsion having compatibility with both of a substrate layer and an adhesive layer selected from a puritan resin emulsion, a modified emulsion or an epoxy resin emulsion and the coated substrate is dried to form an anchor code layer. Next, the coated substrate is immersed in an acrylic adhesive and, after drying, this substrate is flocked with piles by an electrostatic flocking method applying high voltage of about 30000 V to obtain a densely flocked product. As the piles used in flocking a rayon or cotton fiber with a thickness of 0.5 to 1.5 and a length of 0.3 to 1. 0mm is used.

The present invention has been designed in consideration of the circumstances described above, and it is an object thereof to provide a glove in which short fibers are flocked on a substrate surface at a vertical or approximately same angle so that the glove is comfortable, highly flexible, easy to put on and remove, and has a pleasant texture.

As a result of committed research performed by the present inventors to achieve the above object, it was found that by adhering extra fine, extremely short fibers to the inner surface of a glove substrate, flocking can be implemented such that the short fibers do not lie flat, and thus the inventors arrived at the present invention.

The present invention provides a glove having a flocked inner surface, in which short fibers are adhered to an inner surface of a rubber or synthetic resin glove substrate. The glove is manufactured by adhering extra fine short fibers of less than 0.10dtex, which serve as the short fibers, to the inner surface of the rubber or synthetic resin glove substrate. Here, the length of the short fibers is preferably in the range of 0.05mm and 0.4mm.

As a method of manufacturing this glove having a flocked inner surface, the present invention provides a manufacturing method comprising the steps of: applying a latex compound or plastisol compound or synthetic resin solution compound to a surface of a hand former; applying an adhesive to a glove substrate obtained by subjecting the latex compound or plastisol compound or synthetic resin solution compound to semi-gelation or hardening; adhering the short fibers to the glove substrate; and removing the glove substrate inside-out from the hand former.

The present invention also provides a glove having a flocked inner surface, in which short fibers are adhered to an inner surface of a rubber or synthetic resin glove substrate via an adhesive layer. The length of the short fibers is in the range of 0.05mm and 0.4mm, and the average thickness of the adhesive layer is in the range of 0.005mm and 0.05mm. Here, the term "average thickness" indicates an average value of the adhesive layer thickness on a substantially flat part of the glove inner surface, which is calculated excluding the thickness of specific parts having complex shapes, for example the finger crotch portions or the like.

As a method of manufacturing this glove having a flocked inner surface, the present invention provides a manufacturing method comprising the steps of: applying a latex compound or plastisol compound or synthetic resin solution compound to a surface of a hand former; applying an adhesive dispersion liquid having a viscosity of 100 to 950mPa·s to a glove substrate obtained by subjecting the latex compound or plastisol compound or synthetic resin solution compound to semi-gelation or hardening; adhering the short fibers to the glove substrate; and removing the glove substrate inside-out from the hand former.

In the manufacturing methods described above, the short fibers are preferably adhered by electrostatic flocking.

In the glove having a flocked inner surface according to the present invention, extra fine short fibers of less than 0.10dtex are adhered to the inner surface of a glove formed from rubber, synthetic resin, or similar, and hence an improvement in the flyability of the fibers can be achieved, and flocking can be performed in such a manner that the fibers do not lie flat on the substrate surface. As a result, the glove is extremely comfortable, highly flexible, and easy to put on and remove. Moreover, by keeping the extra fine short fibers extremely short i.e. at a value in the range of 0. 05mm and 0.4mm, the short fibers can easily be flocked on the substrate surface at a vertical or approximately same angle, making the glove even more comfortable and flexible. Furthermore, with the glove manufacturing method of the present invention, a glove in which the extra fine short fibers stand up from the inner surface of the glove substrate in a vertical direction without lying flat can be manufactured.

Further, by adhering short fibers having a fiber length of 0.05mm to 0.4mm via an adhesive layer having an average thickness of 0.005mm to 0. 05mm, the short fibers can be prevented from becoming detached, while the flexibility of the glove is maintained due to the comparatively thin adhesive layer. Moreover, since the short fibers stand up in a vertical direction from the inner surface of the glove substrate without lying flat, the texture and wearability of the glove are favorable and it is easy to put on and remove. With the glove manufacturing method of the present invention, a glove in which the short fibers stand up from the inner surface of the glove substrate in a vertical direction without lying flat can be manufactured.

An embodiment of the present invention will be described in detail below.

Fig. 1 is a microphotograph showing a cross-section of a flocked portion in a first example; and

Fig. 2 is a microphotograph showing a cross-section of the flocked portion in a first comparative example.

As described above, a glove having a flocked inner surface according to the present invention is characterized in that short fibers of less than 0.10dtex are adhered to an inner surface of a glove substrate, and in that short fibers are adhered to the inner surface of a rubber or synthetic resin glove substrate via an adhesive layer. The length of the fibers is in the range of 0.05mm and 0.4mm, and the average thickness of the adhesive layer is in the range of 0.005mm and 0.05mm.

The glove substrate is manufactured using rubber or synthetic resin. More specifically, a hand former made of a well-known material such as a ceramic or metal is submerged into a material compound such as latex or a synthetic resin dispersion, whereupon the material compound adhered to the hand former is solidified and so on.

Examples of the latex compound used as the material compound comprise natural rubber (NR) and synthetic rubbers such as acrylonitrile-butadiene rubber (NBR), chloroprene rubber (CR), styrene-butadiene rubber (SBR), isoprene rubber (IR), and polyurethane (PU). Latex compound may be used unmodified as the material compound which serves as the raw material of the glove substrate, or may be blended with a cross linker agent, an accelerator, a softener, a filler, and so on.

Examples of plastisol compound or synthetic resin solution compound used as the material compound comprise dispersions obtained by dispersing a synthetic resin such as polyvinyl chloride (PVC) or acrylic into a plasticizer, a solvent, or the like.

The short fibers are extra fine short fibers having a fineness of less than 0.10dtex, preferably at least 0.005dtex and less than 0.10dtex, and more preferably at least 0.02dtex and at most 0.095dtex. When the fibers have a fineness of less than 0.10dtex, the flyability of the short fibers improves, and the short fibers can be flocked on the substrate surface without lying flat, whereby a glove that is extremely comfortable, highly flexible, and easy to put on and remove can be provided. On the other hand, when the fibers have a fineness of 0.10dtex or more, the glove tends to become slightly less comfortable. When the fineness is 0.05dtex or less, manufacture of the fibers tends to become difficult.

The length of the short fibers is preferably in the range of 0. 05mm and 0. 4mm, and more preferably in the range of 0.10mm and 0.3mm. When short fibers of this length are used, the short fibers can be flocked on the substrate surface without lying flat. When the short fibers are longer than 0.4mm, the fibers tend to lie flat on the glove substrate, leading to an unpleasant texture and a reduction in comfort. When the short fibers are shorter than 0.05mm, manufacture of the fibers tends to become difficult.

There are no particular limitations on the material used for the short fibers, and natural fibers, synthetic fibers, or chemical fibers may be employed, for example natural fibers such as cotton, wool, or silk, chemical fibers such as rayon, cupra^{®}, or acetate, synthetic fibers such as polyethylene, polypropylene, polyester, or nylon, and so on. Of these examples, chemical fibers and synthetic fibers are preferable since the fibers do not curl and short fiber formation processing is easy.

When adhering the short fibers to the inner surface of the glove substrate, various types of adhesive may be used, but an adhesive having an identical material type or a close polarity value to the glove substrate is preferable. The adhesive may also contain identical components to the substrate. In other words, the short fibers may be adhered directly to the glove base material, and there is no particular need to employ an adhesive containing different components to the substrate. By adhering this type of adhesive to the inner surface of the glove substrate according to a method to be described below, an adhesive layer is formed. The average thickness of the adhesive layer is preferably in the range of 0.005 and 0.05mm, more preferably in the range of 0.01 and 0.04mm, and even more preferably in the range of 0.02 and 0.04mm. By setting the average thickness of the adhesive layer in a comparatively thin range of 0.005 to 0.05mm so that extremely short, extra fine fibers such as those described above can be flocked thereon, it is possible to maintain a high degree of flexibility in the glove and reduce material costs. When the average thickness of the adhesive layer exceeds 0.05mm, the amount of the root portion of the short fibers that becomes buried increases, with the aid of capillarity, and the protruding part of the short fibers becomes shorter, leading to a poor texture and a reduction in the thermal insulation property of the glove. When the average thickness of the adhesive layer is less than 0.005mm, it is impossible to maintain sufficient strength to adhere the short fibers, and hence the fibers become detached easily when the glove is put on and removed. Note that in the present invention, the adhesive layer can be set comparatively thinly due to the light weight of the fibers, which makes it possible to reduce the thickness of the adhesive layer adhering the fibers further than in a case where longer fibers are attached. Further, when short fibers having a length of in the range of 0.05 and 0.4mm are used, the resistance that is applied to the fibers when putting on or removing the glove can be suppressed below that of a case in which longer fibers are used, and therefore the fibers are less likely to become detached when putting on or removing the glove.

Next, a manufacturing method for the glove having a flocked inner surface of this embodiment will be described in detail.

In this embodiment, a latex compound or plastisol compound or synthetic resin solution compound is applied to the surface of a hand former and subjected to semi-gelation or hardening to obtain a glove substrate. An adhesive dispersion liquid having a viscosity within a range of 100 to 950mPa·s is then applied to the glove substrate, whereupon the short fibers described above are adhered thereto. The glove is then removed inside-out from the hand former.

A well-known method may be employed to apply the latex compound or plastisol compound or synthetic resin solution compound to the surface of the hand former, and there are no particular limitations on this method, although a method of submerging the hand former in a material compound is preferable. The hand former is preferably submerged in the material compound for approximately 10 to 180 seconds.

Next, the latex compound or plastisol compound or synthetic resin solution compound applied to the hand former is subjected to semi-gelation or hardening through heating processing or the like. In this state, the adhesive is applied and the short fibers are adhered to the adhesive. However, the material compound, such as latex compound or a synthetic resin dispersion liquid or synthetic resin solution, constituting the glove substrate may be used as an adhesive. In this case, the resin-formed glove substrate is submerged in a material compound of the latex compound or plastisol compound or synthetic resin solution compound again such that an adhesive dispersion liquid is applied thereto, and then the short fibers are adhered to the glove substrate.

The viscosity of the adhesive dispersion liquid is preferably in the range of 100 and 950mPa·s, more preferably in the range of 200 and 750mPa·s, and even more preferably in the range of 250 and 550mPa·s. When an adhesive dispersion liquid having this level of viscosity is used, it is easy to apply the adhesive evenly, and a comparatively thin adhesive layer with an average thickness of 0.005mm to 0.05mm can be formed evenly. If the viscosity is less than 100mPa·s, the adhesive dispersion liquid is likely to drip, making it difficult to apply the adhesive evenly and causing the adhesive layer to become too thin such that an adhesive layer having an average thickness of 0.005mm to 0.05mm cannot be formed easily. When the viscosity exceeds 950mPa·s, the adhesive application amount increases, causing the glove to harden and stiffen. Moreover, unevenness in the thickness of the adhesive layer is likely to occur, and the adhesive layer may increase in thickness such that an adhesive layer having an average thickness of 0.005mm to 0.05mm cannot be formed easily.

The solid content, or in other words the solid content concentration, of the adhesive dispersion liquid is preferably in the range of 20 and 40% by weight. When the solid content concentration is less than 20% by weight, the water content increases, making the adhesive more likely to drip such that the adhesive cannot be applied evenly, and causing the adhesive layer to become too thin. On the other hand, when the solid content concentration exceeds 40% by weight, it is difficult to dry the adhesive evenly, solid flocs may form so that the adhesive becomes difficult to handle, and the adhesive layer may become too thick.

When the glove substrate is made of rubber, the drying and curing conditions vary according to the type of latex, but typically, the rubber is preferably dried sufficiently at 60 to 110°C and then heated for approximately 20 to 40 minutes at 100 to 140°C.

When the glove substrate is made of a synthetic resin such as polyvinyl chloride, the gelation conditions vary according to the components of the synthetic resin, but typically, the synthetic resin is preferably heated for approximately 5 to 10 minutes at 150 to 230°C.

In the present specification, the term "adhesion" indicates that the short fibers are adhered in a natural state to the inner surface of the glove substrate, or in other words that the short fibers are adhered evenly or randomly to the inner surface of the glove substrate.

A conventional method of adhering the short fibers to the glove substrate may be employed. Examples of such conventional methods include: placing the short fibers in a sieve and sprinkling the fibers onto the glove substrate, which has been submerged in the adhesive, by shaking the sieve; connecting a tank filled with the short fibers to a suction hole of a blower, sucking up the short fibers, and blowing them out through a blow hole onto the glove substrate which has been submerged in the adhesive; and blowing the short fibers that are sucked up by the blower onto the glove substrate that has been submerged in the adhesive. If necessary, the short fibers may be attached using a combination of one of the methods described above and flocking processing, for example electrostatic flocking using an electrode. In the present invention, electrostatic flocking processing is preferably employed so that the short fibers are flocked at a vertical or approximately same angle to the glove substrate surface by being charged.

The amount of short fibers is preferably held within a range of 0.1g to 10g per pair of gloves (both the left and right gloves). When the amount of short fibers is less than 0.1g, the flocking density decreases, causing a problem in putting on or removing the gloves, and when the amount of short fibers is greater than 10g, the flocking density increases such that the gloves lose their flexibility.

Note that all of the short fibers adhered to the inner surface of the glove substrate are preferably extra fine short fibers, but the extra fine short fibers may be mixed with normal short fibers, i.e. normal short fibers having a fineness of 0.10dtex or more. There are no particular limitations on the proportions in which the extra fine short fibers and normal short fibers are mixed, but in terms of the weight ratio, a range of 100:0 to 20:80 is preferable. If the proportion of extra fine short fibers is less than 20% by weight, the flexibility and comfort of the obtained glove become insufficient.

After short fiber adhesion to the glove substrate and hardening, the glove substrate is removed inside-out from the glove former so that an inner surface-flocked glove having short fibers adhered to its inner surface can be obtained.

The glove having a flocked inner surface obtained in this embodiment is highly flexible and comfortable. Moreover, the short fibers do not become buried in the adhesive layer, the glove has a pleasant texture, the short fibers are unlikely to become detached, and the glove is easy to put on and remove.

### [Examples]

Next, the present invention will be described in further detail, citing examples and manufacturing examples. Note, however, that the present invention is not limited to or by these

### examples.

### (First Example)

A ceramic hand former was submerged in a polyvinyl chloride paste having the composition shown in Table 1, and a polyvinyl chloride sol was adhered to the surface of the hand former by raising the hand former at a sufficient speed to prevent the sol from dripping. Next, the hand former adhered with the sol was set in a semi-gelled state by applying heating processing thereto for 1 to 3 minutes at a temperature of 200 to 230°C.

In this semi-gelled state, the glove substrate was submerged for approximately 10 seconds in an acrylic adhesive dispersion liquid having a viscosity of 400mPa·s and a solid content concentration of 27% by weight, and then removed from the adhesive dispersion liquid. Extra fine short fibers (PET0.2mmOW polyester fibers manufactured by Nissen Co., Ltd.) having a fineness of 0.094dtex and a length of 0.2mm were then adhered to the glove substrate through a blow hole of a blower while rotating the hand former, whereupon electrostatic flocking was applied to the short fibers using a conventional method. The amount of short fibers adhered to one pair of gloves was set at 4g. Heating processing was then performed again for 5 to 8 minutes at a temperature of 200 to 230°C to completely gel the entire glove, whereupon the glove was cooled and removed inside-out from the hand former to obtain a polyvinyl chloride glove (first example).

**(TABLE 1) COMPOSITION OF POLYVINYL CHLORIDE PASTE**

| FORMULATION INGREDIENTS | PROPORTION (PERCENTAGE BY WEIGHT) |
|---|---|
| POLYVINYL CHLORIDE RESIN (ZEST P21, MANUFACTURED BY SHIN DAI-ICHI VINYL CORPORATION) | 100 |
| PLASTICIZER (DIOCTYL PHTHALATE) | 100 |
| STABILIZER (Ca-Zn) | 3 |

The average thickness of the adhesive layer in the glove (first example) manufactured in this manner was 0.025mm. Note that in this example, the "average thickness of the adhesive layer" was calculated by measuring the adhesive layer thickness at 4cm, 10cm, and 25cm in a direction extending from the tip of the middle finger of the glove to the palm of the hand, thereby obtaining a three-point average value. Note that the viscosity of the adhesive dispersion liquid was measured using a BM type viscometer (measurement condition 6rpm, manufactured by Tokimec Inc.).

### (Second Example)

### (A) Preparation of dispersion liquid

In a ball mill, a liquid B prepared according to the formulation shown in Table 3 was poured into a liquid A prepared according to the formulation shown in Table 2 in a mass ratio of 1:1, and dispersed for approximately 24 to 48 hours to obtain a dispersion liquid.

**(TABLE 2) COMPOSITION OF LIQUID A**

| FORMULATION INGREDIENTS | PROPORTION (PERCENTAGE BY WEIGHT) |
|---|---|
| CASEIN | 10 |
| 25% AMMONIA WATER | 5 |
| WATER | 85 |

**(TABLE 3) COMPOSITION OF LIQUID B**

| FORMULATION INGREDIENTS | PROPORTION (PERCENTAGE BY WEIGHT) |
|---|---|
| COLLOIDAL SULFUR | 20 |
| ZINC OXIDE | 40 |
| ACCELERATOR *1 | 10 |
| SURFACTANT *2 | 10 |
| WATER | 80 |

| | |
|---|---|
| *1 ZINC DIBUTYLDITHIOCARBAMATE *2 SODIUM DODECYLBENZENESULFONATE | |

### (B) Preparation of NBR latex compound

NBR latex, a dispersing agent, the dispersion prepared in (A), and water were mixed together in the proportions shown in Table 4, and the mixture was stirred adequately to obtain an NBR latex compound.

**(TABLE 4) COMPOSITION OF NBR LATEX COMPOUND**

| FORMULATION INGREDIENTS | PROPORTION (PERCENTAGE BY WEIGHT) |
|---|---|
| NBR LATEX (Lx-550, MANUFACTURED BY ZEON CORPORATION) | 100 |
| DISPERSING AGENT *3 | 1 |
| DISPERSION LIQUID PREPARED IN (A) | 10 |
| WATER | 100 |

| | |
|---|---|
| *3 POLYCARBOXYLIC ACID TYPE POLYMER SURFACTANT | |

### (C) Manufacture of glove

A ceramic hand former was submerged in an aqueous solution of 35% calcium nitrate and then removed. The hand former was then submerged in the NBR latex liquid prepared in (B) and removed such that the latex compound was adhered to the hand former. Extraction was then performed for 5 to 10 minutes in water heated to a temperature range of 30 to 70°C to remove excess calcium nitrate and excess rubber components. The hand former was then submerged for approximately 10 seconds in an acrylic adhesive dispersion liquid having a viscosity of 400mPa·s and a solid content concentration of 27% by weight, and then removed from the adhesive dispersion liquid. Extra fine short fibers (PET0.2mmOW polyester fibers manufactured by Nissen Co., Ltd.) having a fineness of 0.094dtex and a length of 0.2mm were then adhered to the hand former through a blow hole of a blower while rotating the hand former, whereupon electrostatic flocking was applied to the short fibers using a conventional method. The amount of short fibers adhered to one pair of gloves was set at 4g. The hand former was then dried for 70 minutes at a temperature of 60 to 110°C, and then dried and cured for 25 to 35 minutes at a temperature of 100 to 140°C. The glove was then cooled and removed inside-out from the hand former to obtain an NBR glove (second example).

The average thickness of the adhesive layer of the glove (second example) manufactured in this manner was 0.026mm.

### (Third Example)

A ceramic hand former was submerged in a polyvinyl chloride paste sol having the composition shown in Table 5, and a polyvinyl chloride sol was adhered to the surface of the hand former by raising the hand former at a sufficient speed to prevent the sol from dripping. Next, the hand former adhered with the sol was set in a semi-gelled state by applying heating processing thereto for 1 to 3 minutes at a temperature of 200 to 230°C.

**(TABLE 5) COMPOSITION OF POLYVINYL CHLORIDE PASTE**

| FORMULATION INGREDIENTS | PROPORTION (PERCENTAGE BY WEIGHT) |
|---|---|
| POLYVINYL CHLORIDE RESIN (PSM-31, MANUFACTURED BY KANEKA CORPORATION) | 100 |
| PLASTICIZER (MEZAMOL, MANUFACTURED BY LANXESS K.K.) | 100 |
| STABILIZER (Ca-Zn) | 3 |

In this semi-gelled state, the glove substrate was submerged for approximately 10 seconds in an acrylic adhesive dispersion liquid having a viscosity of 400mPa·s and a solid content concentration of 27% by weight, and then removed from the adhesive dispersion liquid. Short fibers (PET0.2mmOW polyester fibers, fineness 0.094dtex, manufactured by Nissen Co., Ltd.) having a length of 0.2mm were then adhered to the hand former through a blow hole of a blower while rotating the hand former, whereupon electrostatic flocking was applied to the short fibers using a conventional method. The amount of short fibers adhered to one pair of gloves was set at 4g. Heating processing was then performed again for 5 to 8 minutes at a temperature of 200 to 230°C to completely gel the entire glove, whereupon the glove was cooled and removed inside-out from the hand former to obtain a polyvinyl chloride glove (third example) .

The average thickness of the adhesive layer in the glove (third example) manufactured in this manner was 0.025mm.

### (First Comparative Example)

Normal short fibers, more specifically short fibers having a fineness of 1.11dtex and a length of 0. 5mm (D1d* 0.5mm ATSUDE white rayon fibers, manufactured by Kyoto Pile Seni Kogyo Co. , Ltd.), were used instead of extra fine short fibers, and an acrylic adhesive dispersion liquid having a viscosity of 1000mPa·s and a solid content concentration of 27% by weight was employed. Otherwise, an identical manufacturing method to that of the first example was used, whereby a polyvinyl chloride glove (first comparative example) was obtained.

The average thickness of the adhesive layer in the glove (first comparative example) manufactured in this manner was 0.057mm.

### (Second Comparative Example)

Short fibers having a fineness of 1.11dtex and a length of 0.5mm (D1d* 0.5mm ATSUDE white rayon fibers, manufactured by Kyoto Pile Seni Kogyo Co., Ltd.) were used, and an acrylic adhesive dispersion liquid having a viscosity of 1000mPa·s and a solid content concentration of 27% by weight was employed. Otherwise, an identical manufacturing method to that of the second example was used, whereby an NBR glove (second comparative example) was obtained.

The average thickness of the adhesive layer in the glove (second comparative example) manufactured in this manner was 0.055mm.

### (Third Comparative Example)

An acrylic adhesive dispersion liquid having a viscosity of 1000mPa·s and a solid content concentration of 27% by weight was employed. Otherwise, an identical manufacturing method to that of the third example was used, whereby a polyvinyl chloride glove (third comparative example) was obtained.

The average thickness of the adhesive layer in the glove (third comparative example) manufactured in this manner was 0.056mm.

### (Fourth Comparative Example)

An acrylic adhesive dispersion liquid having a viscosity of 80mPa·s and a solid content concentration of 27% by weight was employed. Otherwise, an identical manufacturing method to that of the third example was used, whereby a polyvinyl chloride glove (fourth comparative example) was obtained.

The average thickness of the adhesive layer in the glove (fourth comparative example) manufactured in this manner was 0.004mm.

### (Fifth Comparative Example)

Short fibers (D1d* 0.5mm ATSUDE white rayon fibers, fineness 1.11dtex, manufactured by Kyoto Pile Seni Kogyo Co., Ltd.) having a length of 0.5mm were used. Otherwise, an identical manufacturing method to that of the third example was used, whereby a polyvinyl chloride glove (fifth comparative example) was obtained.

The average thickness of the adhesive layer in the glove (fifth comparative example) manufactured in this manner was 0.025mm.

### (Sixth Comparative Example)

Short fibers (D1d* 0.5mm ATSUDE white rayon fibers, fineness 1.11dtex, manufactured by Kyoto Pile Seni Kogyo Co., Ltd.) having a length of 0. 5mm were used, and an acrylic adhesive dispersion liquid having a viscosity of 800mPa·s and a solid content concentration of 27% by weight was employed. Otherwise, an identical manufacturing method to that of the third example was used, whereby a polyvinyl chloride glove (sixth comparative example) was obtained.

The average thickness of the adhesive layer in the glove (sixth comparative example) manufactured in this manner was 0.042mm.

### (Seventh Comparative Example),

Short fibers (D1d* 0.5mm ATSUDE white rayon fibers, fineness 1.11dtex, manufactured by Kyoto Pile Seni Kogyo Co., Ltd.) having a length of 0.5mm were used, and an acrylic adhesive dispersion liquid having a viscosity of 1000mPa·s and a solid content concentration of 27% by weight was employed. Otherwise, an identical manufacturing method to that of the third example was used, whereby a polyvinyl chloride glove (seventh comparative example) was obtained.

The average thickness of the adhesive layer in the glove (seventh comparative example) manufactured in this manner was 0.057mm.

### Glove Evaluation

### [Measurement of Average Friction Coefficient]

The average friction coefficient was measured using the following method in relation to gloves of the first and second examples and the first and second comparative examples. The results are shown in Table 6.

### (Measurement Method)

The average friction coefficient was measured on a surface testing machine by using KES-SE FRICTION TESTER (manufactured by KATO TECH CO., LTD.).
A contactor constituted by 20 aligned piano wires having a diameter of 0.5mm lying tightly on a smooth plate having a width of 10mm and a length of 10mm was placed on a sample of 4cm square put on a smooth metallic surface so as to make the piano wires perpendicular to a scanning direction. The contact surface was arranged to be applied with a force of 50gf. Next, the sample was moved 30mm horizontally at a constant speed of 1mm/sec. The running resistance (average friction coefficient) generated by the friction between the sample and the contactor was measured.

### (Sample)

A dry sample (DRY) and a wet sample (WET) were used, and the respective average friction coefficients thereof were measured. The wet sample was produced by submerging a dry sample in water for one minute and lightly wiping it with a cloth.

**(TABLE 6) AVERAGE FRICTION COEFFICIENT**

| SAMPLE | AVERAGE FRICTION COEFFICIENT (DRY) | AVERAGE FRICTION COEFFICIENT (WET) |
|---|---|---|
| FIRST EXAMPLE | 0.201 | 0.260 |
| SECOND EXAMPLE | 0.193 | 0.253 |
| FIRST COMPARATIVE EXAMPLE | 0.263 | 0.495 |
| SECOND COMPARATIVE EXAMPLE | 0.243 | 0.560 |

As can be seen from the results of Table 6, the average friction coefficient of the first and second examples was smaller than that of the comparative examples, i.e. conventional inner surface-flocked gloves, in both the dry state and wet state. As the value of the average friction coefficient decreases, resistance also decreases, and hence the wearability of the glove improves. It can be seen from the test results in the wet state that even when the inside of the glove becomes wet from sweat or the like, a favorable degree of wearability can be maintained in the first and second examples.

### [Cross-section Comparison]

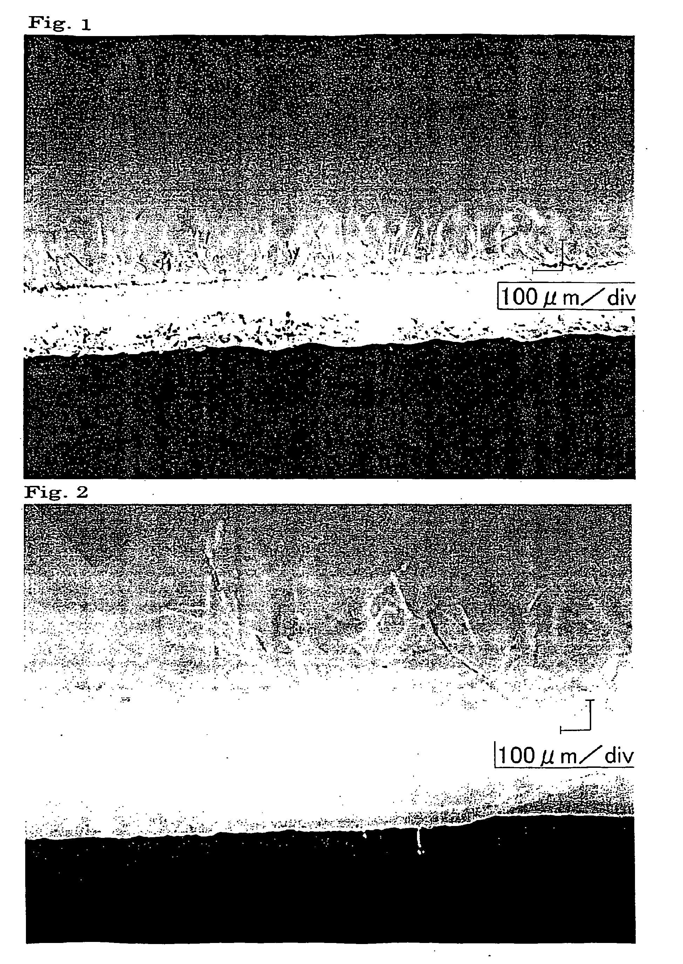

Figs. 1 and 2 show enlarged photographs of the cross-sections of the first example and first comparative example. Fig. 1 shows the first example, while Fig. 2 shows the first comparative example. It can be seen that in the first example, the fibers do not lie flat, but stand upright from the substrate surface, in contrast to the first comparative example which is a conventional inner surface-flocked glove.

### [Practical Trial]

Ten monitors wore the gloves of the first and second examples and the first and second comparative examples, and evaluated the flexibility and comfort of the gloves according to the following evaluation criteria. The results are shown in Table 7.

### (Glove Flexibility Criteria)

- ○:: Soft
- △:: Slightly stiff
- ×:: Stiff
(Comfort Criteria)
- ○:: Good
- △:: Quite good
- ×:: Bad

**(TABLE 7) PRACTICAL TRIAL**

| SAMPLE | GLOVE FLEXIBILITY | COMFORT |
|---|---|---|
| FIRST EXAMPLE | ○ | ○ |
| SECOND EXAMPLE | ○ | ○ |
| FIRST COMPARATIVE EXAMPLE | △ | △ |
| SECOND COMPARATIVE EXAMPLE | × | × |

As can be seen from the results in Table 7, in the first and second examples, extra fine short fibers of less than 0.10dtex were adhered to the inner surface of the glove, and the fibers stood upright from the substrate surface without lying flat. Hence, in comparison with the first and second comparative examples, i.e. conventional inner surface-flocked gloves, the comfort level was extremely high and the gloves were considered extremely flexible and therefore highly wearable.

### [Short Fiber Adhesion Condition]

The degree to which the short fibers became detached from the substrate was evaluated using the following criteria in relation to the gloves of the third example and the third through seventh comparative examples. The results are shown in Table 8.
- A:: No detached short fibers
- B:: Few detached short fibers
- C:: Some detached short fibers
- D:: Many detached short fibers or great adhesion unevenness [Texture]

Ten monitors wore the gloves of the third example and the third through seventh comparative examples, and evaluated the texture of the gloves according to the following evaluation criteria. The results are shown in Table 8.
- A:: Feels and looks good
- B:: Feels and looks quite good
- C:: Feels and looks quite bad
- D:: Feels and looks bad

**(TABLE 8) PRACTICAL TRIAL**

| SAMPLE | SHORT FIBER LENGTH (mm) | AVERAGE THICKNESS OF ADHESIVE LAYER (mm) | SHORT FIBER ADHESION CONDITION | TEXTURE |
|---|---|---|---|---|
| THIRD EXAMPLE | 0.2 | 0.025 | A | A |
| THIRD COMPARATIVE EXAMPLE | 0.2 | 0.056 | A | C |
| FOURTH COMPARATIVE EXAMPLE | 0.2 | 0.004 | D | D |
| FIFTH COMPARATIVE EXAMPLE | 0.5 | 0.025 | C | C |
| SIXTH COMPARATIVE EXAMPLE | 0.5 | 0.042 | B | B |
| SEVENTH COMPARATIVE EXAMPLE | 0.5 | 0.057 | A | B |

In the glove of the third example, the short fibers were flocked at a vertical or approximately same angle in relation to the substrate surface, providing a pleasant texture and favorable wearability. Further, the adhesive layer of the glove of the third example was set comparatively thinly, and therefore the glove was highly flexible, the short fibers did not become buried in the adhesive layer, and the short fibers did not become detached. In contrast, although the short fibers of the third comparative example did not become detached, a large part of the root portion of the short fibers became buried in the adhesive layer in comparison with the third example, and therefore the protruding part of the fibers was short. As a result, the glove felt slightly stiff, and hence the flexibility of the glove was judged to be poor in comparison with the third example. In the glove of the fourth comparative example, the adhesive layer was too thin, leading to many detached short fibers and adhesion unevenness and creating an unpleasant texture. In the glove of the fifth comparative example, the adhesive layer was thin in relation to the length of the short fibers, and hence detached short fibers were observed in certain locations, leading to a deterioration in texture. In the glove of the sixth comparative example, the adhesive layer was slightly thin in relation to the length of the short fibers, and hence detached short fibers were observed occasionally. Although the feel of the glove was comparatively good, the fibers lay flat on the substrate, and hence the feel was not rated as highly as that of the third example. No detached short fibers were observed in the glove of the seventh comparative example, but since the adhesive layer was thick, the glove felt stiff, and therefore had poor flexibility and texture in comparison with the third example.

## Claims

1. A glove having a flocked inner surface, in which short fibers are adhered to an inner surface of a rubber or synthetic resin glove substrate via an adhesive layer,
wherein a length of the short fibers is in the range of 0.05mm and 0.4mm, and an average thickness of the adhesive layer is in the range of 0.005mm and 0.05mm.

2. The glove according to claim 1, wherein the length of the short fibers is in the range of 0.10 mm and 0.3 mm.

3. The glove according to claims 1 or 2, wherein the average thickness of the adhesive layer is in the range of 0.01 mm and 0.04 mm, on 0.02 mm and 0.04 mm.

4. Amanufacturingmethod for the glove having a flocked inner surface according to any one of claims 1 to 3, comprising the steps of:
applying a latex compound or plastisol compound or synthetic resin solution compound to a surface of a hand former;
applying an adhesive dispersion liquid having a viscosity of 100 to 950mPa·s to a glove substrate obtained by subjecting the latex compound or plastisol compound or synthetic resin solution compound to semi-gelation or hardening;
adhering the short fibers to the glove substrate; and
removing the glove substrate inside-out from the hand former.

5. The manufacturing method for a glove having a flocked inner surface according to claim 4, wherein the short fibers are.adhered by electrostatic flocking.

## Patentansprüche

1. Handschuh mit einer beflockten Innenfläche, bei dem kurze Fasern an einer Innenfläche eines Handschuh-Trägermaterials aus einem Gummi oder Kunstharz mittels einer Klebeschicht angeklebt sind, wobei die kurzen Fasern eine Länge im Bereich von 0,05 mm bis 0,4 mm haben und die Klebeschicht eine mittlere Dicke im Bereich von 0,005 mm bis 0,05 mm hat.

2. Handschuh nach Anspruch 1, wobei die Länge der kurzen Fasern im Bereich von 0,10 mm bis 0,3 mm beträgt.

3. Handschuh nach Anspruch 1 oder 2, wobei die mittlere Dicke der Klebeschicht im Bereich von 0,01 mm bis 0,04 mm oder von 0,02 mm bis 0,04 mm beträgt.

4. Verfahren zum Herstellen eines Handschuhs mit beflockter Innenfläche nach einem der Ansprüche 1 bis 3, mit den Schritten:
Aufbringen einer Latex-Zusammensetzung oder einer Plastisol-Zusammensetzung oder einer Kunstharzlösungszusammensetzung auf eine Oberfläche einer Handform,
Aufbringen einer flüssigen Klebstoffdispersion mit einer Viskosität von 100 bis 950 mPa·s auf ein Handschuh-Trägermaterial, welches durch Halberstarren oder Aushärten der Latex-Zusammensetzung oder der Plastisol-Zusammensetzung oder der Kunstharzlösungszusammensetzung erhalten wurde,
Ankleben der kurzen Fasern an das Handschuh-Trägermaterial, und
Entfernen des Handschuh-Trägermaterials von der Handform durch Umstülpen.

5. Verfahren zum Herstellen eines Handschuhs mit beflockter Innenfläche nach Anspruch 4, wobei die kurzen Fasern durch elektrostatische Beflockung aufgeklebt werden.

## Revendications

1. Gant ayant une surface interne floquée, dans lequel on colle des fibres courtes à une surface interne d'un substrat de gant de caoutchouc ou de résine synthétique via une couche adhésive,
dans lequel la longueur des fibres courtes se situe dans la plage de 0,05 mm à 0,4 mm et l'épaisseur moyenne de la couche adhésive se situe dans la plage de 0,005 mm à 0,05 mm.

2. Gant selon la revendication 1, dans lequel la longueur des fibres courtes se situe dans la plage de 0,10 mm à 0,3 mm.

3. Gant selon la revendication 1 ou 2, dans lequel l'épaisseur moyenne de la couche adhésive se situe dans la plage de 0,01 mm à 0,04 mm ou de 0,02 mm à 0,04 mm.

4. Procédé de fabrication du gant ayant une surface interne floquée selon l'une quelconque des revendications 1 à 3, comprenant les étapes consistant à :
appliquer un composé de latex ou un composé de plastisol ou un composé de solution de résine synthétique sur la surface d'un dispositif formateur de main ;
appliquer un liquide de dispersion adhésif ayant une viscosité de 100 à 950 mPa.s sur un substrat de gant obtenu en soumettant le composé de latex ou le composé de plastisol ou le composé de solution de résine synthétique à une mi-gélification ou à un durcissement ;
coller les fibres courtes au substrat de gant ; et
retirer le substrat de gant de l'intérieur vers l'extérieur du dispositif formateur de main.

5. Procédé de fabrication pour un gant ayant une surface interne floquée selon la revendication 4, dans lequel on colle les fibres courtes par flocage électrostatique.
